# EUROPEAN PATENT APPLICATION

(11) **EP 3 109 866 A1**
(43) Date of publication of application: **28.12.2016**
(21) Application number: 16175616.8
(22) Date of filing: 22.06.2016
(51) Int. Cl.: H01B 7/28, H01B 17/50, H01B 7/282

(54) **TUBULAR STRUCTURE FOR COVERING AN ELECTRICALLY CONDUCTING ELEMENT**

(30) Priority: 26.06.2015 FI 20155509
(71) Applicant: Ensto Finland Oy, 06100 Porvoo (FI)
(72) Inventor: Aarnio, Anssi, 06100 Porvoo (FI); Alkila, Kauko, 06100 Porvoo (FI)
(74) Representative: Papula Oy

(57) **Abstract**

A tubular structure (1) for covering an electrically conducting element having a superhydrophobic outer surface (2) and a method for the production thereof is disclosed.

## Description

### FIELD OF THE INVENTION

The invention relates to a tubular structure for covering an electrically conducting element and a method for the production thereof.

### BACKGROUND

Tubular structures, such as shrinkable tubes for electrically connecting or terminating cables and cable sheaths, are used for covering electrically conducting elements and for providing various functions, such as antitracking.

Such structures are often exposed to buildup of water, ice, snow and corrosive substances and may be damaged by corrosion and ingress of water. When such tubular structures are used for covering medium to high voltage conducting elements, eddy currents may also be induced. When the surface of the tubular structure becomes moist, current can flow between two different electrical potential, thus creating a conductive layer. Current heats the surface and can heat the surface up to the point when the moisture starts to evaporate, creating areas prone to discharges. Discharges damage the surface, leading to reduced life time.

Tubular structures that are more resistant to such damage are thus in need.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

An improved tubular structure for covering an electrically conducting element is disclosed, the tubular structure having a superhydrophobic outer surface.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 is a cross-sectional view of a tubular structure according to an embodiment;
Fig. 2A illustrates an exemplary embodiment of a part of a superhydrophobic outer surface;
Fig. 2B shows another exemplary embodiment of a part of a superhydrophobic outer surface;
Fig. 2C illustrates a cross-section of another exemplary embodiment of a superhydrophobic outer surface;
Fig. 3 illustrates an embodiment of a method for producing a tubular structure; and
Fig. 4 shows an embodiment of a method for producing a tubular structure.

### DETAILED DESCRIPTION

The detailed description provided below in connection with the appended drawings is intended as a description of the present examples and is not intended to represent the only forms in which the present example may be constructed or utilized. However, the same or equivalent functions and sequences may be accomplished by different examples.

A tubular structure for covering an electrically conducting element has a superhydrophobic outer surface.

A tubular structure for covering an electrically conducting element may, when in use, be arranged so as to partially or completely cover the electrically conducting element. It may thereby insulate and/or protect the electrically conducting element.

In the context of this specification, the term "superhydrophobic outer surface" refers to an outer surface that exhibits superhydrophobic properties. The outer surface is an outside, i.e. external, surface of the tubular structure, i.e. a surface of the tubular structure away from an electrically conducting element which it is intended to cover.

In the context of this specification, the term "surface" may refer to the outer boundary of an artifact, such as a tubular structure, or a material layer constituting or resembling such a boundary. A surface may include not only the outer edge of a material, but also an outermost portion or layer of a material. A surface may have a thickness and may include various particles, such as particles of a nanofiller.

A superhydrophobic surface may be formed by creating a microscopically rough surface in a material. Such a material may be of poor wettability, i.e. a material that is not easily wettable and sheds water well. On a superhydrophobic surface, a drop of water may form a nearly spherical bead that may roll when the surface is tilted slightly. Thus, superhydrophobic surfaces may shed water and snow easily. Furthermore, superhydrophobic surfaces may resist soiling by waterborne and other contaminants and may be easily cleaned.

The superhydrophobic outer surface may comprise a plurality of microstructures and/or nanostructures.

In the context of this specification, the term "microstructure" may refer to a structure having a diameter of about 1 µm to about 1000 µm, or about 1 µm to about 500 µm, or about 50 µm to about 200 µm, or about 20 µm to about 50 µm in at least one dimension. Adjacent microstructures may be directly adjacent to one another, so that the base of a microstructure is directly in contact with the base of an adjacent microstructure. They may also be spaced apart, such that the facets of the microstructures are not in contact and are spaced apart by a segment of the surface of the outer layer. They may be spaced apart by about 1 µm to about 1000 µm, or about 1 µm to about 500 µm, or about 50 µm to about 200 µm, or about 20 µm to about 50 µm.

In the context of this specification, the term "nanostructure" may refer to a structure having a diameter in the range of about 1 nm to about 1000 nm, or about 1 nm to about 500 nm, or about 1 nm to about 100 nm, in at least one dimension. Adjacent nanostructures may be directly adjacent to one another, so that the base of a nanostructure is directly in contact with the base of an adjacent nanostructure. They may also be spaced apart, such that the facets of the nanostructures are not in contact and are spaced apart by a segment of the surface of the outer layer. They may be spaced apart by about 1 nm to about 1000 nm, or about 1 nm to about 500 nm, or about 50 nm to about 200 nm.

The microstructures and/or nanostructures may comprise or be formed of, for example, protruding rectangular or round posts, prisms, spheres, or ridges, or any combination thereof. The microstructures and/or nanostructures may also comprise or be formed of grooves or cavities, or any combination thereof. The microstructures and/or nanostructures may also comprise or be formed of of any combination of structures selected from protruding rectangular or round posts, prisms, spheres, ridges, grooves and cavities.

In embodiments where the superhydrophobic outer surface comprises a plurality of both microstructures and nanostructures, the microstructures and nanostructures may vary across one or more dimensions of the superhydrophobic outer surface. A plurality of nanostructures may also be formed on a surface, or substantially on all of the surfaces, of the microstructures.

In an embodiment, the superhydrophobic outer surface may comprise or be formed of parallel microstructures and/or nanostructures. The microstructures and/or nanostructures may identically run the length of the superhydrophobic surface at the same height along the vertical direction and be segmented across the width of the superhydrophobic surface into different discrete microstructures and/or nanostructures, e.g. ridges separated by grooves between the ridges. Such ridges may be parallel or perpendicular to the length of the tubular structure. Individual microstructures and/or nanostructures may also be of different heights.

In an embodiment, the superhydrophobic outer surface may comprise or be formed of discrete microstructures and/or nanostructures that may vary across the width and length of the superhydrophobic outer surface. The microstructures and/or nanostructures may be all of the same height, or they may vary in height. The microstructures and/or nanostructures may be directly adjacent to one another, or they may be spaced apart. The microstructures and/or nanostructures may be of any geometry or a combination of geometries. As an example, the microstructures and/or nanostructures could be protruding rectangular or round posts or prisms, spheres, ridges, grooves or cavities, or any combination thereof.

The superhydrophobic outer surface may comprise a plurality of parallel microstructures.

The superhydrophobic outer surface may comprise a plurality of parallel microstructures and optionally a plurality of nanostructures formed on the surface of the plurality of microstructures.

The superhydrophobic outer surface may comprise a plurality of parallel microstructures and optionally a plurality of nanostructures formed on the surface of the plurality of microstructures; wherein the distance between the parallel microstructures is in the range of about 1 µm to about 1000 µm, or about 1 µm to about 500 µm, or about 50 µm to about 200 µm, or about 20 µm to about 50 µm. The distance between the nanostructures may be in the range of about 1 nm to about 1000 nm, or about 1 nm to about 500 nm, or about 50 nm to about 200 nm.

In embodiments where a plurality of nanostructures is formed on a surface, or on the surfaces, of a plurality of microstructures, a surface (one or more surfaces, or substantially all surfaces) of each of the microstructures may be covered by a plurality of nanostructures. For example, the microstructures may be parallel ridges or grooves, and the nanostructures may be rectangular or round posts, prisms or spheres disposed on one or more surfaces of the parallel ridges.

The tubular structure may comprise an outer layer having a superhydrophobic outer surface, wherein the superhydrophobic outer surface comprises a plurality of microstructures and/or nanostructures formed of the material of the outer layer. In other words, an outer surface (at least a part of the outer surface, or substantially the entire outer surface) of the outer layer of the tubular structure is superhydrophobic. In such a tubular structure, the superhydrophobic outer surface may be an integral part of the outer layer as opposed e.g. to a superhydrophobic coating sprayed on the surface of the tubular structure. As the plurality of microstructures and/or nanostructures is formed of the material of the outer layer, the superhydrophobic outer surface cannot be easily wiped or rubbed off the tubular structure in the way a superhydrophobic coating can.

The tubular structure may further comprise one or more additional layers, for instance a conducting layer, an insulating layer, a stress-controlling layer or any combination thereof. The outer layer may also be a conducting outer layer.

The outer layer may comprise or consist of a hydrophobic material, i.e. a material having a hydrophobic surface. The superhydrophobic outer surface may therefore be formed of the hydrophobic material. The outer layer may, in principle, also be coated with a hydrophobic coating.

In the context of this specification, the term "hydrophobic material" may refer to a material, the surface of which is hydrophobic. In the context of this specification, the term "hydrophobic surface" may refer to a surface that has a water contact angle of approximately 90° or more. Typically, on a hydrophobic surface, for example, a 2 mm diameter water drop beads up but does not run off the surface when the surface is tilted moderately. A hydrophobic surface may have a large hysteresis between advancing and receding contact angles (typically 20° or more).

The outer layer may comprise or consist of a polymeric material. The superhydrophobic outer surface may therefore comprise or be formed of the polymeric material. The polymeric material may also comprise or be a blend of two or more polymers or a copolymer of two or more monomers.

The polymeric material may be e.g. a thermoplastic material. Suitable thermoplastic materials or polymers may include e.g. polyolefins. Examples of polyolefins are ethylene homopolymers and ethylene copolymers, such as linear low-density polyethylene (LLDPE), very low-density polyethylene (VLDPE), low-density polyethylene (LDPE), medium-density polyethylene (MDPE), high-density polyethylene (HDPE), copolymers of ethylene and vinyl acetate (EVA), ethylene-butylene acrylate (EBA), cross-linked polyethylene (XLPE), polypropylene (PP) and polymethylpentene (PMP). In embodiments where the outer layer is conducting, the outer layer may also comprise a mixture or blend of a termoplastic material or other polymeric material and a conducting material, such as conductive carbon black, carbon fibers, graphites, graphenes, fullerenes, or carbon nanotubes for increasing the conductivity of the material.

The polymeric material may also comprise or be a thermoplastic elastomer, polydimethylsilicone, liquid silicone rubber or other silicone, EPDM or other rubberlike material, or any blend or mixture thereof. The superhydrophobic outer surface may therefore comprise or be formed of such materials.

The polymeric material may also comprise or consist of a mixture of a polymeric material, for instance one or more of the above polymeric materials, and a nanofiller. In the context of this specification, the term "nanofiller" should be understood as referring to an agent the individual elements or particles of which have a diameter in the range of about 1 nm to about 1000 nm, or about 1 nm to about 500 nm, or about 1 nm to about 100 nm, in at least one dimension. The nanofiller may be dispersible in the polymeric material and may remain in solid form in the mixture. The nanofiller is thus a roughness-inducing material and may form a plurality of microstructures and/or nanostructures. Suitable nanofillers may be selected from, for example, nanoparticles, nanofibres, nanoplates or nanotubes, or any combination thereof. Suitable nanofillers may be selected from, for example, nanoclays such as phyllosilicates, nano-oxides such as TiO₂, nanosilica (SiO₂) or nanoalumina (Al₂O₃), carbon nanotubes, silsesquioxanes, metallic nanoparticles, fluoropolymer (such as polytetrafluoroethylene) fibers, fluoroalkylsilanes, 3-(2,2,3,3,4,4,5,5-octafluoropentyloxy)propyltriethoxysilane, nanoclays, nano montmorillonite, zinc oxide, or any combination thereof.

The nanofiller may be at least partially embedded in the polymeric material of the outer layer, thereby forming the superhydrophobic outer surface. Such a superhydrophobic surface may be formed e.g. by mixing a polymeric material with a nanofiller, for instance one or more of the nanofillers described above, curing or polymerizing the mixture and optionally dissolving or volatilizing at least a part of the polymeric material. Such a mixture may be e.g. a composite comprising or consisting of
40-70 % (w/w) polyethene or other suitable polymer;
0-20 % (w/w) polyethylene glycol or other suitable soluble component;
1-3 % (w/w) compatibilizer; and
5-50 % (w/w) nanofiller.

The proportion of each component in the composite may be selected so that they add up to 100 % (w/w).

The nanofiller included in the mixture or composite and thereby at least partially embedded in the polymeric material of the outer layer may be any nanofiller described in this specification. The components of the composite, such as the polymeric material, the nanofiller, the soluble component, and the compatibilizer may be selected e.g. on the basis of the other components and/or the intended properties of the tubular structure.

The tubular structure may, in principle, be any tubular structure suitable for covering an electrically conducting element. The electrically conducting element may comprise e.g. a cable, a cable joint, a cable termination, an overhead line and/or a wire shield. The electrically conducting element may also be a medium to high voltage conducting element. The element may also comprise an assembly of two or more individual electrically conducting elements.

The tubular structure may, for instance, be a shrinkable tube for electrically connecting or terminating cables; a shrinkable tube for insulating a conductor, a cable, or a termination of a cable; a shrinkable tube for sheathing or protecting a conductor, a cable, or a joint connecting cables; an insulation layer for covering a conductor, a cable or other conductive material; or a protective layer for covering a conductor, a cable or other conductive material. The shrinkable tube may be heat shrinkable or cold shrinkable.

The superhydrophobic outer surface may have a water contact angle of at least 140°, or at least 150°. In the context of this specification, the term "water contact angle" should be understood as referring to a static water contact angle.

The superhydrophobic outer surface may have a water contact angle of at least 140°, or at least 150°, and a sliding angle of at most 10°.

A method for producing the tubular structure according to one or more embodiments described in this specification is disclosed, wherein the method comprises forming a superhydrophobic outer surface on the outer surface of the tubular structure.

The superhydrophobic outer surface may comprise a plurality of microstructures and/or nanostructures.

The microstructures may have a diameter of about 1 µm to about 1000 µm, or about 1 µm to about 500 µm, or about 50 µm to about 200 µm, or about 20 µm to about 50 µm, in at least one dimension. Adjacent microstructures may be directly adjacent to one another, so that the base of a microstructure is directly in contact with the base of an adjacent microstructure. They may also be spaced apart, such that the facets of the microstructures are not in contact and are spaced apart by a segment of the surface of the outer layer. They may be spaced apart by about 1 µm to about 1000 µm, or about 1 µm to about 500 µm, or about 50 µm to about 200 µm, or about 20 µm to about 50 µm.

The nanostructures may have a diameter in the range of about 1 nm to about 1000 nm, or about 1 nm to about 500 nm, or about 1 nm to about 100 nm, in at least one dimension. Adjacent nanostructures may be directly adjacent to one another, so that the base of a nanostructure is directly in contact with the base of an adjacent nanostructure. They may also be spaced apart, such that the facets of the nanostructures are not in contact and are spaced apart by a segment of the surface of the outer layer. They may be spaced apart by about 1 nm to about 1000 nm, or about 1 nm to about 500 nm, or about 50 nm to about 200 nm.

The microstructures and/or nanostructures may comprise or be formed of, for example, protruding rectangular or round posts, prisms, spheres, or ridges, or any combination thereof. The microstructures and/or nanostructures may also comprise or be formed of grooves or cavities, or any combination thereof. The microstructures and/or nanostructures may also comprise or be formed of of any combination of structures selected from protruding rectangular or round posts, prisms, spheres, ridges, grooves and cavities.

In embodiments where the superhydrophobic outer surface comprises a plurality of both microstructures and nanostructures, the microstructures and nanostructures may vary across one or more dimensions of the superhydrophobic outer surface. A plurality of nanostructures may also be formed on a surface, or substantially on all of the surfaces, of the microstructures.

In an embodiment, the superhydrophobic outer surface may comprise or be formed of parallel microstructures and/or nanostructures. The microstructures and/or nanostructures may identically run the length of the superhydrophobic surface at the same height along the vertical direction and be segmented across the width of the superhydrophobic surface into different discrete microstructures and/or nanostructures, e.g. ridges separated by grooves between the ridges. Such ridges may be parallel or perpendicular to the length of the tubular structure. Individual microstructures and/or nanostructures may also be of different heights.

In an embodiment, the superhydrophobic outer surface may comprise or be formed of discrete microstructures and/or nanostructures that may vary across the width and length of the superhydrophobic outer surface. The microstructures and/or nanostructures may be all of the same height, or they may vary in height. The microstructures and/or nanostructures may be directly adjacent to one another, or they may be spaced apart. The microstructures and/or nanostructures may be of any geometry or a combination of geometries. As an example, the microstructures and/or nanostructures could be protruding rectangular or round posts or prisms, spheres, ridges, grooves or cavities, or any combination thereof.

The superhydrophobic outer surface may comprise a plurality of parallel microstructures.

The superhydrophobic outer surface may comprise a plurality of parallel microstructures and optionally a plurality of nanostructures formed on the surface of the plurality of microstructures.

The superhydrophobic outer surface may comprise a plurality of parallel microstructures and optionally a plurality of nanostructures formed on the surface of the plurality of microstructures; wherein the distance between the parallel microstructures is in the range of about 1 µm to about 1000 µm, or about 1 µm to about 500 µm, or about 50 µm to about 200 µm, or about 20 µm to about 50 µm. The distance between the nanostructures may be in the range of about 1 nm to about 1000 nm, or about 1 nm to about 500 nm, or about 50 nm to about 200 nm.

In embodiments where a plurality of nanostructures is formed on a surface, or on the surfaces, of a plurality of microstructures, a surface (one or more surfaces, or substantially all surfaces) of each of the microstructures may be covered by a plurality of nanostructures. For example, the microstructures may be parallel ridges or grooves, and the nanostructures may be rectangular or round posts, prisms or spheres disposed on one or more surfaces of the parallel ridges.

The superhydrophobic outer surface may be formed continuously or semi-continuously.

The method may comprise providing a tubular structure comprising an outer layer; and forming a superhydrophobic outer surface of the material of the outer layer. The superhydrophobic outer surface is formed on the outer surface of the outer layer.

The method may comprise providing a tubular structure comprising an outer layer; and forming a superhydrophobic outer surface on the outer layer of the material of the outer layer, wherein the superhydrophobic outer surface comprises a plurality of microstructures and/or nanostructures.

The tubular structure may further comprise one or more additional layers, for instance a conducting layer, an insulating layer, a stress-controlling layer or any combination thereof. The outer layer may also be a conducting outer layer.

The outer layer may comprise or consist of a hydrophobic material, i.e. a material having a hydrophobic surface. The superhydrophobic outer surface may therefore be formed of the hydrophobic material. The outer layer may, in principle, also be coated with a hydrophobic coating.

The method may comprise providing the tubular structure comprising the outer layer by extruding. When the tubular structure comprises two or more layers having different compositions, the layers may be coextruded into a multilayer tube, thereby arranging the two or more layers concentrically within the outer layer. The tubular structure may be provided by extruding continuously or semicontinuously.

The method may comprise providing a tubular structure comprising an outer layer; providing a tool comprising a structured surface; and pressing the structured surface of the tool against the surface of the outer layer, thereby forming a superhydrophobic outer surface on the outer layer of the material of the outer layer. Such a method may be suitable for continuously or semi-continuously producing a tubular structure.

The method may comprise providing a tubular structure comprising an outer layer; providing a tool comprising a structured surface; and pressing the structured surface of the tool against the surface of the outer layer, thereby forming a superhydrophobic outer surface on the outer layer of the material of the outer layer, wherein the superhydrophobic outer surface comprises a plurality of microstructures and/or nanostructures.

The outer layer may comprise or consist of a polymeric material. The superhydrophobic outer surface may therefore comprise or be formed of the polymeric material. The polymeric material may also comprise or be a blend of two or more polymers or a copolymer of two or more monomers.

The polymeric material may be e.g. a thermoplastic material. Suitable thermoplastic materials or polymers may include e.g. polyolefins. Examples of polyolefins are ethylene homopolymers and ethylene copolymers, such as linear low-density polyethylene (LLDPE), very low-density polyethylene (VLDPE), low-density polyethylene (LDPE), medium-density polyethylene (MDPE), high-density polyethylene (HDPE), copolymers of ethylene and vinyl acetate (EVA), ethylene-butylene acrylate (EBA), cross-linked polyethylene (XLPE), polypropylene (PP) and polymethylpentene (PMP). In embodiments where the outer layer is conducting, the outer layer may also comprise a mixture or blend of a termoplastic material or other polymeric material and a conducting material, such as conductive carbon black, carbon fibers, graphites, graphenes, fullerenes, or carbon nanotubes for increasing the conductivity of the material.

The polymeric material may also comprise or be a thermoplastic elastomer, polydimethylsilicone, liquid silicone rubber or other silicone, EPDM or other rubberlike material, or any blend or mixture thereof. The superhydrophobic outer surface may therefore comprise or be formed of such materials.

The polymeric material may also comprise or consist of a mixture of a polymeric material and a nanofiller. In the context of this specification, the term "nanofiller" should be understood as referring to an agent the individual elements or particles of which have a diameter in the range of about 1 nm to about 1000 nm, or about 1 nm to about 500 nm, or about 1 nm to about 100 nm, in at least one dimension. The nanofiller may be dispersible in the polymeric material and may remain in solid form in the mixture. The nanofiller is thus a roughness-inducing material and may form a plurality of microstructures and/or nanostructures. Suitable nanofillers may be selected from, for example, nanoparticles, nanofibres, nanoplates or nanotubes, or any combination thereof. Suitable nanofillers may be selected from, for example, nanoclays such as phyllosilicates, nano-oxides such as TiO₂, nanosilica (SiO₂) or nanoalumina (Al₂O₃), carbon nanotubes, silsesquioxanes, metallic nanoparticles, fluoropolymer (such as polytetrafluoroethylene) fibers, fluoroalkylsilanes, 3-(2,2,3,3,4,4,5,5-octafluoropentyloxy)propyltriethoxysilane, nanoclays, nano montmorillonite, zinc oxide, or any combination thereof.

The nanofiller may be at least partially embedded in the polymeric material of the outer layer, thereby forming the superhydrophobic outer surface. Such a superhydrophobic surface may be formed e.g. by mixing a polymeric material with a nanofiller, for instance one or more of the nanofillers described above, curing or polymerizing the mixture and optionally dissolving or volatilizing at least a part of the polymeric material. Such a mixture may be e.g. a composite comprising
40-70 % (w/w) polyethene or other suitable polymer;
0-20 % (w/w) polyethylene glycol or other suitable soluble component;
1-3 % (w/w) compatibilizer; and
5-50 % (w/w) nanofiller.

The proportion of each component in the composite may be selected so that they add up to 100 % (w/w).

The nanofiller included in the mixture or composite and thereby at least partially embedded in the polymeric material of the outer layer may be any nanofiller described in this specification. The components of the composite, such as the polymeric material, the nanofiller, the soluble component, and the compatibilizer may be selected e.g. on the basis of the other components and/or the intended properties of the tubular structure.

The superhydrophobic outer surface may thus be formed by mechanically pressing with the structured surface of the tool. The structured surface forms a pattern on the surface of the outer layer, thereby forming a superhydrophobic outer surface. As the structured surface of the tool is replicated at least to some extent as the superhydrophobic outer surface, i.e. the superhydrophobic becomes a negative of the structured surface of the tool, at least to some extent, the structured surface may also be considered to be a superhydrophobic surface. The structured surface may therefore also comprise a plurality of any microstructures and/or nanostructures described in this specification, or a negative thereof.

The tool may comprise e.g. a roll or a plurality of rolls. Such a tool, e.g. a roll, may comprise an outer surface formed of e.g. titanium, brass, platinum, copper or tool steel, or any other metal having a high melting point, or any combination or alloy thereof. The material of the outer surface of the tool may, however, in principle be of any material, provided that the outer surface of the tool may be formed into the structured surface. The structured surface may be formed e.g. by engraving using a laser or by abrasive blasting using e.g. 20 µm particles.

The structured surface of the tool may be pressed to the surface of the outer layer e.g. when the surface of the outer layer is sufficiently soft, e.g. when it is still warm after extruding or when warmed. When the outer layer cools down, it may harden. The method may further comprise pressing the structured surface of the tool to the surface of the outer layer and subsequently curing or hardening the surface of the outer layer, thereby forming a superhydrophobic outer surface on the outer layer of the material of the outer layer. In such a method, the surface of the outer layer may be sufficiently soft prior to the curing or hardening.

The method may comprise providing a tubular structure comprising an outer layer, wherein the outer layer comprises or consists of a composite that is partially soluble or partially volatilizable; and dissolving or volatilizing a part of the composite, thereby forming a superhydrophobic outer surface on the outer surface of the tubular structure.

The method may comprise providing a tubular structure comprising an outer layer, wherein the outer layer comprises or consists of a composite that is partially soluble or partially volatilizable; and dissolving or volatilizing a part of the composite, thereby forming a superhydrophobic outer surface on the outer surface of the tubular structure, wherein the superhydrophobic outer surface comprises a plurality of microstructures and/or nanostructures.

The composite may comprise e.g. a composite that is partially soluble in polyethylene glycol, water or any other suitable solvent. An example of a composite that is partially soluble or partially volatilizable is a composite comprising
40-70 % (w/w) polyethene or other suitable polymer;
0-20 % (w/w) polyethylene glycol or other suitable soluble component;
1-3 % (w/w) compatibilizer; and
5-50 % (w/w) nanofiller, for instance one or more of the nanofillers described above.

The proportion of each component in the composite may be selected so that they add up to 100 % (w/w).

The nanofiller included in the mixture or composite and thereby at least partially embedded in the polymeric material of the outer layer may be any nanofiller described in this specification. The components of the composite, such as the polymeric material, the nanofiller, the soluble component, and the compatibilizer may be selected e.g. on the basis of the other components and/or the intended properties of the tubular structure.

As a part of the composite is dissolved or volatilized, the nanofiller may thereby be at least partially embedded in the polymeric material of the outer layer. The nanofiller may form a plurality of microstructures and/or nanostructures and thereby form a superhydrophobic outer surface.

In such a method, the tubular structure may be provided by coextruding the outer layer and at least one other layer arranged concentrically within the outer layer. Dissolving a part of the composite may be performed e.g. by dissolving a part of the composite in polyethylene glycol or another suitable solvent during expanding of the tubular structure.

The method may comprise providing a tubular structure comprising an outer layer; and abrasive blasting the outer surface of the outer layer, thereby forming a superhydrophobic outer surface on the outer layer of the material of the outer layer.

The method may comprise providing a tubular structure comprising an outer layer; and abrasive blasting the outer surface of the outer layer, thereby forming a superhydrophobic outer surface on the outer layer of the material of the outer layer, wherein the superhydrophobic outer surface comprises a plurality of microstructures and/or nanostructures. The abrasive blasting may be performed using e.g. 20 µm particles.

The method may also comprise extruding a tubular structure comprising an outer layer through a die and blowing particles onto the surface of the extruded tubular structure exiting the die, for instance using pressurized air, such that the particles adhere to the surface of the tubular structure, the particles thereby forming microstructures and/or nanostructures on the surface. The method may also comprise blowing particles so that they form a curtain (sheet) of particles, and extruding a tubular structure through a die so that when it exits the die, it passes through the curtain of particles and particles adhere onto the surface of the tubular structure, thereby forming microstructures and/or nanostructures on the surface. The size of the particles may be selected so that microstructures and/or nanostructures of suitable dimensions can be obtained. The particles may be e.g. particles of one or more nanofillers described in this specification.

The tubular structure may, in principle, be any tubular structure suitable for covering an electrically conducting element. The electrically conducting element may comprise e.g. a cable, a cable joint, a cable termination, an overhead line and/or a wire shield. The electrically conducting element may also be a medium to high voltage conducting element. The element may also comprise an assembly of two or more individual electrically conducting elements.

The tubular structure may, for instance, be a shrinkable tube for electrically connecting or terminating cables; a shrinkable tube for insulating a conductor, a cable or other conductive material; a shrinkable tube for sheathing or protecting a conductor, a cable or other conductive material; an insulation layer for covering a conductor, a cable or other conductive material; or a protective layer for covering a conductor, a cable or other conductive material. The shrinkable tube may be heat shrinkable or cold shrinkable.

The superhydrophobic outer surface may have a water contact angle of at least 140°, or at least 150°. In the context of this specification, the term "water contact angle" should be understood as referring to a static water contact angle.

The superhydrophobic outer surface may have a water contact angle of at least 140°, or at least 150°, and a sliding angle of at most 10°.

Also disclosed is a tubular structure for covering an electrically conducting element obtainable by one or more embodiments of the method.

The tubular structure may, in principle, be any tubular structure suitable for covering an electrically conducting element. The electrically conducting element may comprise e.g. a cable, a cable joint, a cable termination, an overhead line and/or a wire shield. The electrically conducting element may also be a medium to high voltage conducting element. The element may also comprise an assembly of two or more individual electrically conducting elements.

The tubular structure may, for instance, be a shrinkable tube for electrically connecting or terminating cables; a shrinkable tube for insulating a conductor, a cable, or a termination of a cable; a shrinkable tube for sheathing or protecting a conductor, a cable, or a joint connecting cables; an insulation layer for covering a conductor, a cable or other conductive material; or a protective layer for covering a conductor, a cable or other conductive material. The shrinkable tube may be heat shrinkable or cold shrinkable.

The embodiments described hereinbefore may be used in any combination with each other. Several of the embodiments may be combined together to form a further embodiment. A product or a method may comprise at least one of the embodiments described hereinbefore.

A technical effect of one or more embodiments described in this specification is that the tubular structure is simple and relatively easy to manufacture. The method for producing the tubular structure may be used in a practical manner and in a continuous or semi-continuous process.

A technical effect of one or more embodiments described in this specification is that the superhydrophobic outer surface is durable and is not easily rubbed off.

A technical effect of one or more embodiments described in this specification is that the superhydrophobic outer surface is capable of withstanding irradiation, stretching, shrinking and/or heat, including heat treatment. This may be relevant in particular to shrinkable tubes.

Reference will now be made in detail to the embodiments of the present invention, an example of which is illustrated in the accompanying drawing.

The description below discloses some embodiments of the invention in such a detail that a person skilled in the art is able to utilize the invention based on the disclosure. Not all steps of the embodiments are discussed in detail, as many of the steps will be obvious for the person skilled in the art based on this specification.

For reasons of simplicity, item numbers will be maintained in the following exemplary embodiments in the case of repeating components.

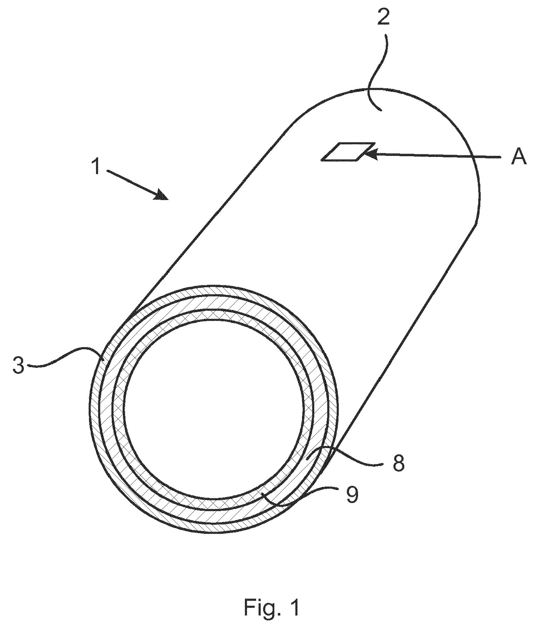

Figure 1 illustrates a tubular structure 1, which in this exemplary embodiment is a shrinkable tube for electrically connecting or terminating cables, but may also be any other tubular structure. The tubular structure comprises an outer layer 3, which is the outermost layer. The outer layer 3 may be e.g. a conducting layer and may comprise e.g. a thermoplastic material, such as a blend or mixture of polyethylene, ethyl vinyl acetate and conductive carbon black in an amount that renders the material electrically conducting. The tubular structure may further comprise other layers, such as an insulating inner layer 8 and an innermost layer 9 arranged concentrically within the outer layer 3. The insulating inner layer 8 may also comprise a thermoplastic material similar to the material of the outer layer, such as a blend or mixture of polyethylene, ethyl vinyl acetate, a filler and optionally a colouring agent. The insulating inner layer 8 surrounds an innermost layer 9, which comprises a stress controlling material, for instance a thermoplastic or elastomeric material mixed with conductive carbon black. The outer surface of the outer layer 3 is a superhydrophobic outer surface 2.

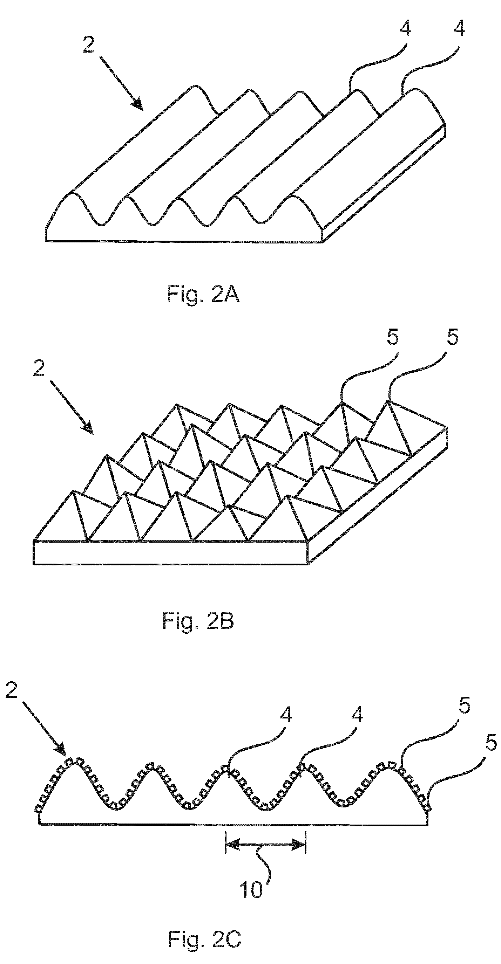

Figures 2A-B are enlargements of a part of the superhydrophobic outer surface 2 denoted with A in Figure 1 and illustrate exemplary embodiments of the superhydrophobic outer surface 2.

Figure 2A illustrates an exemplary embodiment of a part of the superhydrophobic outer surface 2. In this embodiment, the superhydrophobic outer surface 2 is formed of parallel microstructures 4. The microstructures may identically run the length of the superhydrophobic surface 2 at the same height along the vertical direction and be segmented across the width of the superhydrophobic surface 2 into different discrete microstructures, e.g. ridges 4 separated by grooves between the ridges. Such ridges 4 may be parallel or perpendicular to the length of the tubular structure. Individual microstructures may also be of different heights. In a similar manner, the superhydrophobic outer surface 2 could also be formed of parallel nanostructures.

Figure 2B shows another exemplary embodiment of a part of the superhydrophobic outer surface 2 formed of discrete nanostructures 5 that may vary across the width and length of the superhydrophobic outer surface 2. The nanostructures 5 may be all of the same height, or they may vary in height, as in Fig. 2B. The nanostructures 5 may be directly adjacent to one another, or they may be spaced apart. The nanostructures 5 may be of any geometry or a combination of geometries. As an example, the nanostructures 5 could be protruding rectangular or round posts or prisms, as in Fig. 2B. In a similar manner, the superhydrophobic outer surface could also be formed of discrete microstructures.

Figure 2C illustrates a cross-section of an exemplary embodiment of a superhydrophobic outer surface 2 formed of a combination of microstructures 4 and nanostructures 5. The surfaces of each of the microstructures 4, in this example parallel ridges, are covered by a plurality of nanostructures 5, in this example protrusions or posts. The nanostructures 5 may be all of the same height, or they may vary in height. The nanostructures 5 may be directly adjacent to one another, or they may be spaced apart. In this exemplary embodiment, the microstructures 4 are separated, i.e. spaced, from each other by a distance 10, which is the distance between the peaks of adjacent microstructures.

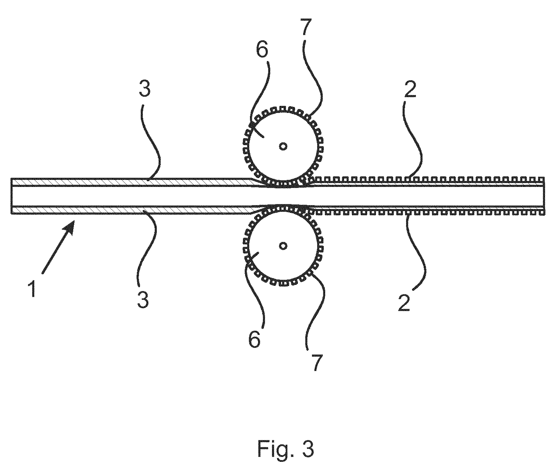

Fig. 3 illustrates an exemplary embodiment of the method for producing the tubular structure. In this exemplary embodiment, a tubular structure 1 is provided continuously e.g. by extruding; a cross-section of the tubular structure 1 is depicted. The tubular structure 1 comprises an outer layer 3, which is sufficiently soft. A pair of rotating rolls 6 comprising structured surfaces 7 formed of e.g. copper are pressed against the outer surface of the outer layer 3 so that the structured surface 7 forms a pattern on the surface of the outer layer 3, thereby forming a superhydrophobic outer surface 2.

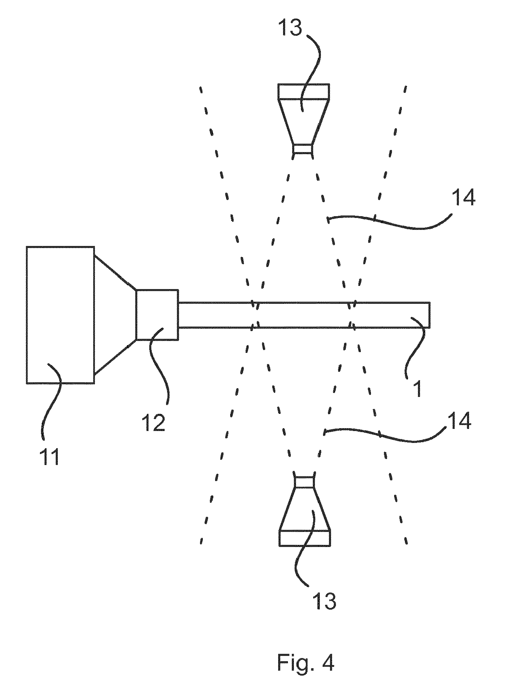

Fig. 4 shows another exemplary embodiment of the method for producing an embodiment of the tubular structure 1. The tubular structure may be e.g. the tubular structure described in Fig. 1 or any other tubular structure described in this specification. The tubular structure 1 is provided by extruding continuously through the die 12 of an extrusion apparatus 11; if the tubular structure comprises two or more layers (not shown in this figure), the layers may be coextruded. The surface of the newly extruded tubular structure 1 is still hot. Nozzles 13 are disposed so that they blow a curtain or sheet of particles 14. As the tubular structure 1 is being extruded, it exits and extends outwards from the die 12, so that the surface of the tubular structure passes through the curtain or sheet of particles 14. The particles may thus adhere to the surface of the tubular structure 1 and may be embedded in the hot material of the surface. Thus the particles may form, depending on the size of the particles, microstructures and/or nanostructures (not visible in the figure), thereby forming a superhydrophobic surface. The particles may be e.g. particles of one or more nanofillers described in this specification.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A tubular structure (1) for covering an electrically conducting element, **characterized in that** the tubular structure comprises an outer layer (3) having a superhydrophobic outer surface (2), wherein the superhydrophobic outer surface comprises a plurality of microstructures (4) and/or nanostructures (5) formed of the material of the outer layer (3).

2. The tubular structure according to claim 1, wherein the outer layer (3) comprises or consists of a polymeric material and optionally a nanofiller.

3. The tubular structure according to claim 2, wherein the polymeric material is a thermoplastic material.

4. The tubular structure according to any one of claims 1 - 3, wherein the superhydrophobic outer surface (2) comprises a plurality of parallel microstructures (4) and optionally a plurality of nanostructures (5) formed on the surface of the plurality of microstructures (4); wherein the distance between the parallel microstructures (4) is in the range of about 1 µm to about 1000 µm, or about 1 µm to about 500 µm, or about 50 µm to about 200 µm, or about 20 µm to about 50 µm.

5. The tubular structure according to any one of claims 1 - 4, wherein the tubular structure (1) is a shrinkable tube for electrically connecting or terminating cables; a shrinkable tube for insulating a conductor, a cable, or a termination of a cable; a shrinkable tube for sheathing or protecting a conductor, a cable, or a joint connecting cables; an insulation layer for covering a conductor, a cable or other conductive material; or a protective layer for covering a conductor, a cable or other conductive material.

6. The tubular structure according to any one of claims 1 - 5, wherein the superhydrophobic outer surface (2) has a water contact angle of at least 140°, or at least 150°, and a sliding angle of at most 10°.

7. A method for producing the tubular structure (1) according to any one of claims 1 - 6, comprising
providing a tubular structure (1) comprising an outer layer (3);
**characterized in that** the method further comprises
forming a superhydrophobic outer surface (2) on the outer layer (3) of the material of the outer layer (3), wherein the superhydrophobic outer surface (2) comprises a plurality of microstructures (4) and/or nanostructures (5).

8. The method according to claim 7, comprising providing the tubular structure (1) comprising the outer layer (3) by extruding.

9. The method according to claim 7 or 8, comprising
providing a tubular structure (1) comprising an outer layer (3);
providing a tool (6) comprising a structured surface (7); and
pressing the structured surface (7) of the tool (6) against the surface of the outer layer (3), thereby forming a superhydrophobic outer surface (2) on the outer layer (3) of the material of the outer layer, wherein the superhydrophobic outer surface (2) comprises a plurality of microstructures (4) and/or nanostructures (5).

10. The method according to claim 9, wherein the tool is a roll.

11. The method according to any one of claims 7 - 10, comprising
providing a tubular structure (1) comprising an outer layer (3), wherein the outer layer (3) comprises or consists of a composite that is partially soluble or partially volatilizable; and
dissolving or volatilizing a part of the composite, thereby forming a superhydrophobic outer surface (2) on the outer surface of the tubular structure (1), wherein the superhydrophobic outer surface (2) comprises a plurality of microstructures (4) and/or nanostructures (5).

12. The method according to any one of claims 7 - 11, comprising
providing a tubular structure (1) comprising an outer layer (3); and
abrasive blasting the outer surface of the outer layer (3), thereby forming a superhydrophobic outer surface (2) on the outer layer of the material of the outer layer, wherein the superhydrophobic outer surface (2) comprises a plurality of microstructures (4) and/or nanostructures (5).

13. The method according to any one of claims 7 - 12, wherein the outer layer (3) comprises or consists of a polymeric material and optionally a nanofiller.

14. The method according to claim 13, wherein the polymeric material is a thermoplastic material.

15. The method according to any one of claims 7 - 14, wherein the superhydrophobic outer surface (2) comprises a plurality of parallel microstructures (4) and optionally a plurality of nanostructures (5) formed on the surface of the plurality of microstructures (4); and wherein the distance between the parallel microstructures (4) is in the range of about 1 µm to about 1000 µm, or about 1 µm to about 500 µm, or about 50 µm to about 200 µm, or about 20 µm to about 50 µm.

16. The method according to any one of claims 7 - 15, wherein the tubular structure (1) is a shrinkable tube for electrically connecting or terminating cables; a shrinkable tube for insulating a conductor, a cable, or a termination of a cable; a shrinkable tube for sheathing or protecting a conductor, a cable, or a joint connecting cables; an insulation layer for covering a conductor, a cable or other conductive material; or a protective layer for covering a conductor, a cable or other conductive material.

17. The method according to any one of claims 7 - 16, wherein the superhydrophobic outer surface (2) has a water contact angle of at least 150° and a sliding angle of at most 10°.
